# FASCICULE DE BREVET EUROPEEN

(11) **EP 0 600 785 B1**
(45) Date de publication et mention de la délivrance du brevet: **09.07.1997**
(21) Numéro de dépôt: 93402894.5
(22) Date de dépôt: 30.11.1993
(51) Int. Cl.: H04M 1/18

(54) **Boîtier à verrouillage notamment pour appareil téléphonique public**
Gehäuse für Münzfernsprecher mit Verriegelung
Enclosure, with lock mechanism, for pay telephone

(30) Priorité: 01.12.1992 FR 9214453
(43) Date de publication de la demande: 08.06.1994
(73) Titulaire: SMART INGENIERIE, F-26000 Valence (FR)
(72) Inventeur: Doucet, Joel, F-07130 Soyons (FR)
(74) Mandataire: Martin, Jean-Jacques

(56) Documents cités:
- US-A- 3 846 594
- US-A- 4 645 876
- US-A- 5 086 463

## Description

La présente invention a trait d'une façon générale aux boîtiers de sécurité notamment pour publiphones.

Il est important qu'un appareil tel qu'un publiphone, accessible au public, présente une bonne sécurité, en particulier une bonne résistance aux actes de vandalisme.

On connaît déjà dans la techique différentes solutions pour réaliser un boîtier de publiphone de sécurité.

Une première solution connue consiste à prévoir un boîtier qui comporte un fond, par exemple ancré dans un mur, et un capot qui est relié au fond par des charnières. Sur le capot sont fixés des ergots. Un mécanisme à crémaillère prévu sur le fond est apte à être actionné par le barillet d'une serrure à clé pour sélectivement emprisonner ou libérer les ergots.

Un tel boîtier connu présente cependant des inconvénients. Tout d'abord, il nécessite un nombre important de pièces, ce qui aboutit à un coût élevé. Ce coût est encore accru par le fait que les charnières utilisées doivent être extrêmement résistantes.

Dans un autre boîtier connu, les charnières sont supprimées, et l'on prévoit deux jeux d'ergots dans des régions opposées du capot, qui coopèrent respectivement avec deux crémaillères, fixées chacune sur le fond mais solidaires l'une de l'autre et actionnées là encore par le barillet d'une serrure. Un tel boîtier présente cependant un nombre de pièces encore accru, et finalement s'avère sensiblement aussi coûteux que le premier.

Un autre inconvénient de ces types de boîtiers de sécurité connus réside en ce qu'ils nécessitent un réglage du dispositif de fermeture à crémaillère. En effet, le mouvement de rotation du barillet de la serrure est transformé en un mouvement linéaire, ou en un mouvement de rotation selon un autre axe, et dans la pratique il s'avère nécessaire d'effectuer, au cours de la fabrication en série, un réglage au cas par cas pour chaque boîtier.

On connaît en outre par US-A-4 645 876 un boîtier tel que défini dans le préambule de la revendication 1 annexée.

Un tel boîtier, s'il permet un verrouillage efficace, est en revanche désavantageux en ce que le capot et le fond, à l'état ouvert, sont complètement désolidarisés l'un de l'autre. Il en résulte la nécessité, lorsque l'on doit effectuer une intervention sur des composants montés sur le capot, de disposer d'un endroit pour poser celui-ci. Ceci peut s'avérer tout à fait malcommode notamment dans l'espace exigu d'une cabine téléphonique.

La présente invention vise à pallier cet inconvénient de la technique antérieure, et à proposer un boîtier dans lequel, à l'état ouvert, le capot puisse continuer à être retenu par le fond dans une position permettant une intervention sur les composants portés par le capot.

Elle propose à cet effet un boîtier de sécurité notamment pour appareil téléphonique public, ayant les particularités de la revendication 1.

D'autres aspects, buts et avantages de la présente invention apparaîtront mieux à la lecture de la description détaillée suivante d'un mode de réalisation préféré de celle-ci, donnée à titre d'exemple et faite en référence aux dessins annexés, sur lesquels:
la figure 1 est une vue en élévation de face du fond d'un boîtier selon la présente invention,
la figure 2 est une vue de dessous selon la flèche II du fond de boîtier de la figure 1,
la figure 3 est une vue de côté selon la flèche III du fond de boîtier des figures 1 et 2,
la figure 4 est une vue en plan de l'intérieur d'un capot destiné à être monté sur le fond représenté sur les figures 1 à 3,
la figure 5 est une vue selon les flèches V-V de la figure 4,
la figure 6 est une vue en plan d'une pièce de liaison du boîtier selon l'invention, et
la figure 7 est une vue en coupe selon les flèches VII-VII de la figure 6.

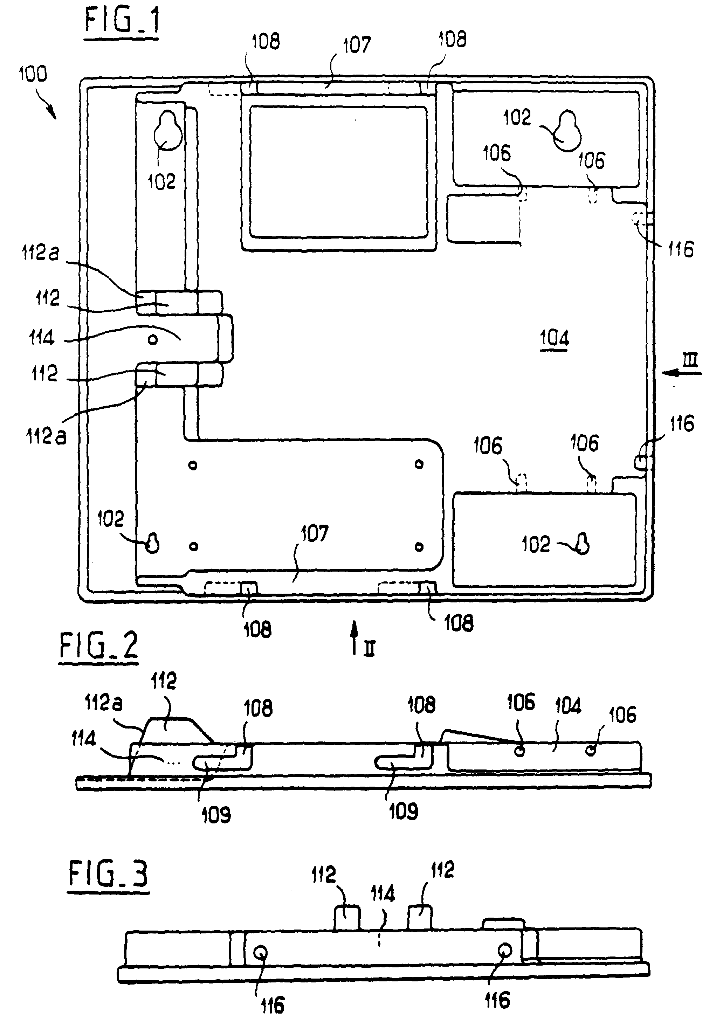

En référence tout d'abord aux figures 1 à 3, on a représenté un fond de boîtier 100, réalisé de préférence en matière plastique injectée, qui présente un contour généralement rectangulaire.

Quatre trous traversants 102 sont prévus pour l'engagement de vis destinés à son ancrage dans un mur ou analogue.

Dans une région latérale (à droite sur la figure 1), le fond 100 définit une partie en saillie ou en plateau 104 comprenant des bords inférieur et supérieur horizontaux et parallèles, dans lesquels sont formés quatre trous borgnes taraudés 106 destinés à recevoir des vis à tête (non représentées).

Le long des bords supérieur et inférieur du fond 100, dans les parois latérales horizontales, tournées vers l'extérieur, de parties en saillie 107, sont ménagées quatre encoches 108, 109 qui comprennent chacune une partie 108 orientée perpendiculairement au plan de la feuille et débouchant sur le dessus du fond, et une partie 109 orientée parallèlement au plan de la feuille, en l'espèce vers la gauche, ces encoches adoptant chacune la forme générale d'un "L", et présentant de préférence une largeur essentiellement constante.

Le long d'un bord latéral du boîtier, en l'espèce le bord droit sur les figures 1 et 2, sont ménagés deux alésages borgnes 116 orientés parallèlement aux parties 109 des encoches.

Dans la région latérale opposée du fond 100, à gauche sur les figures 1 et 2, sont venues de moulage deux protubérances 112 orientées généralement horizontalement et séparées par une région en creux 114 formant un passage horizontal. Comme le montre la figure 3, les bossages 112 présentent une forme généralement trapézoïdale.

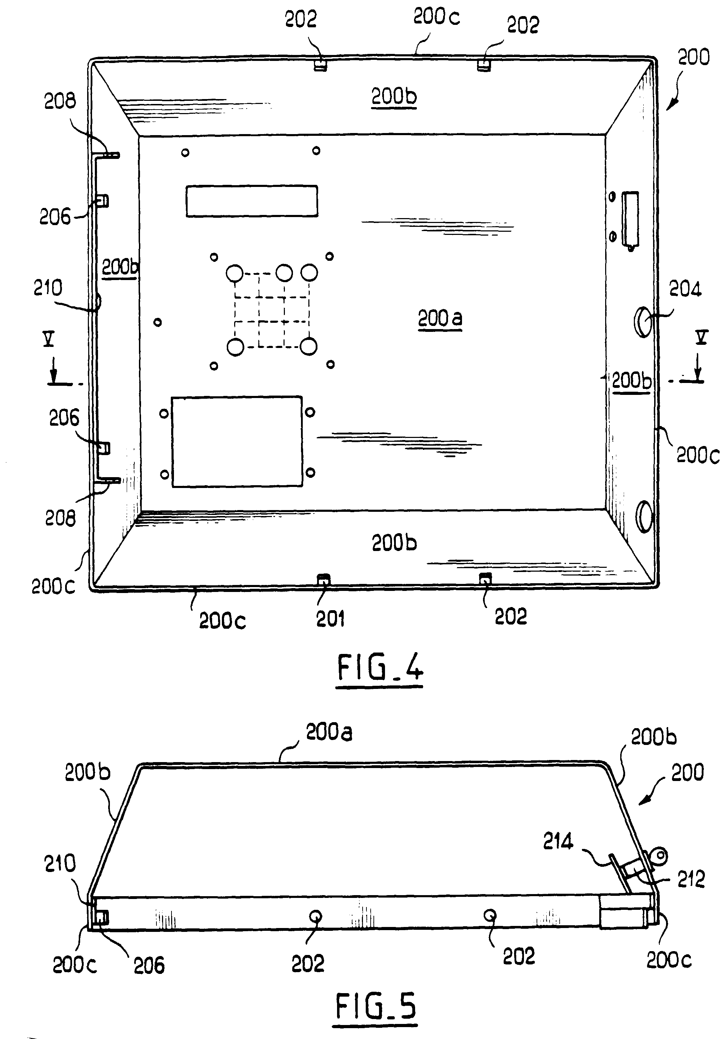

Le fond de boîtier 100 est destiné à recevoir un capot de boîtier 200 représenté sur les figures 4 et 5.

Ce capot est réalisé de préférence en tôle métallique pliée, et présente une face avant 200a dans lequel sont prévus les aménagements nécessaires à la fixation et au logement des composants d'un dispositif tel qu'un publiphone, quatre faces latérales biseautées 200b, et enfin quatre faces latérales droites 200c prolongeant lesdites faces biseautées.

Du côté intérieur des faces droites supérieure et inférieure sont fixées solidement, par exemple par rivetage ou soudage, respectivement deux ergots 202 orientés verticalement.

Sur la face droite située à gauche sur les figures 4 et 5, et correspondant au bord droit du fond des figures 1 et 2, sont prévus deux autres ergots 206 orientés verticalement.

Sur le même côté du capot est fixé intérieurement un élément de tôle 210 qui comporte, dans deux ailes opposées orientées horizontalement, deux trous traversants 208.

Enfin, du côté opposé, la paroi en biseau 200b comporte un trou traversant ovale destiné au passage du barillet 212 d'une serrure à clé, qui porte à son extrémité intérieure une plaque de verrouillage 214 capable d'être tournée dans l'une ou l'autre parmi deux positions décalées angulairement de 90°.

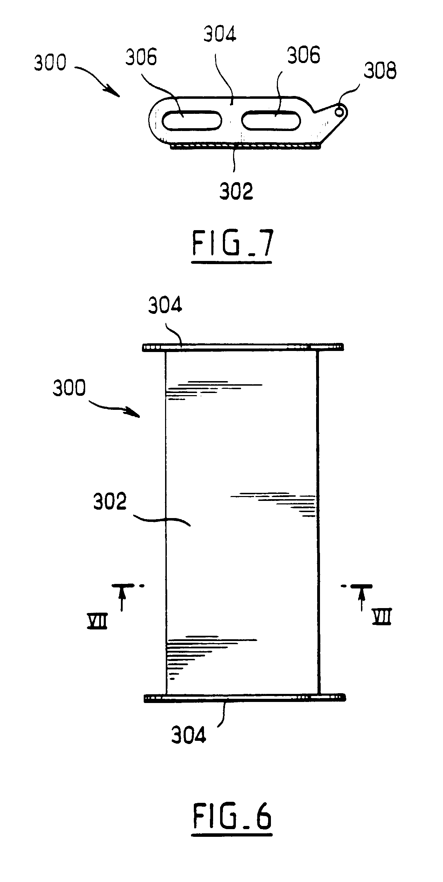

Le boîtier selon l'invention comporte en outre une pièce formant charnière coulissante 300 représentée sur les figures 6 et 7. Cette pièce 300 comporte une plaque centrale 302 et deux ailes 304 s'étendant aux deux extrémités respectives de ladite plaque, perpendiculairement à celle-ci. Chaque aile 304 comporte deux trous oblongs traversants 306 orientés parallèlement à la plaque 302, et un trou traversant circulaire 308 prévu dans une partie en prolongement de ladite aile.

On va maintenant décrire l'assemblage et le fonctionnement du boîtier constitué pour l'essentiel des éléments 100, 200 et 300.

L'élément formant charnière 300 est monté sur le fond en appliquant sa plaque centrale 302 contre la face extérieure de la partie en plateau 104 du fond 100, de telle sorte que ses ailes 304 viennent longer les bords horizontaux supérieur et inférieur de ladite partie 104. Quatre vis (non représentées) sont engagées à travers les quatre trous oblongs 306 et vissées dans les trous taraudés 106 du fond. On réalise ainsi un montage coulissant, selon une direction horizontale, de l'élément 300 sur le fond. Le capot 200 est alors mis en place de telle sorte que les trous 208 de l'élément 210 soient alignés avec les trous 308 de l'élément 300. Des axes ou tourillons appropriés (non représentés) sont engagés dans ces trous pour réaliser l'articulation, selon un axe vertical s'étendant le long du bord latéral droit du fond (sur la figure 1), du capot 200 sur l'élément coulissant 300.

Lorsque l'élément 300 occupe une position déplacée au maximum vers l'extérieur, et après s'être assuré que la plaque de verrouillage 214 est en position de déverrouillage, le capot 200 peut être fermé contre le fond 100. Les ergots 202 viennent alors au droit des parties 108 des encoches du fond, pour s'y engager. Lorsque le capot est entièrement fermé, lesdits ergots 202 ont atteint le fond des encoches.

Il est alors possible de faire coulisser le capot 200 et l'élément formant charnière 300, celle-ci prenant une position rentrée. Les ergots 202 glissent alors dans les parties d'encoches 109, sensiblement jusqu'au fond de celles-ci. Dans le même temps, les ergots 206 du capot pénètrent dans les trous 116 prévus dans le fond 100, avec lesquels ils sont alignés. On notera qu'au cours de ce mouvement, la plaque de verrouillage 214 de la serrure est disposée de telle sorte qu'elle peut passer dans l'espace 114 qui sépare les deux protubérances 112.

Après ce mouvement de coulissement, la serrure peut être manoeuvrée pour faire tourner la plaque de verrouillage 214 jusque dans une position dans laquelle elle s'étend à cheval entre les deux protubérances 112, en prenant appui contre les faces inclinées extérieures 112a desdites protubérances. De la sorte, le capot 200 et la charnière coulissante 300 ne peuvent pas adopter les mouvements inverses de ceux qu'on vient de décrire, et le capot ne peut être ouvert. Les quatre ergots 202 et les deux ergots 206 donnent au boîtier ainsi fermé une excellente résistance à l'arrachement.

Ainsi on observe que le boîtier selon la présente invention comporte extrêmement peu de pièces mobiles. Avec les tolérances de fabrications usuelles, il ne nécessite aucun réglage, et il est tout à fait économique à réaliser.

On notera en outre que la charnière coulissante 300 est facultative, le capot pouvant simplement être placé sur le fond de manière à aligner les ergots 202 avec les parties d'encoches 108, puis translaté selon les deux directions perpendiculaires définies par les deux parties d'encoches 108, 109, puis enfin verrouillé à l'aide de la serrure à barillet 212.

Bien entendu, la présente invention n'est nullement limitée à la forme de réalisation décrite ci-dessus et représentée sur les dessins, mais l'homme de l'art saura y apporter toute variante ou modification conforme à son esprit.

## Revendications

1. Boîtier de sécurité notamment pour appareil téléphonique public, du type comportant deux éléments à savoir un fond (100) et un capot (200), et des moyens de fixation mécanique et de verrouillage du capot sur le fond, les moyens de fixation mécanique et de verrouillage comprenant :
une pluralité d'ergots (202) formés sur l'un des éléments (200);
une pluralité d'encoches (108, 109) destinées à coopérer avec lesdits ergots et comportant chacune une première partie (108) dans laquelle s'engage initialement un ergot associé (202) au cours d'un mouvement de rapprochement mutuel des deux éléments (100, 200), et une seconde partie (109) inclinée par rapport à la première et dans laquelle s'engage ensuite ledit ergot associé lors d'un mouvement de glissement des deux éléments l'un par rapport à l'autre, et
des moyens de verrouillage (112, 214) comprenant une pièce mobile (214) solidaire de l'un des éléments (200) et apte à coopérer avec une partie fixe (112) solidaire de l'autre élément (100) pour maintenir le boîtier fermé en empêchant un mouvement de glissement mutuel des deux éléments dans le sens inverse de celui du glissement précité,
caractérisé en ce qu'il comprend en outre une charnière (300) montée coulissante sur l'un des éléments (100) et définissant la direction dudit mouvement de glissement, et sur laquelle l'autre élément (200) est articulé autour d'un axe généralement perpendiculaire à la direction dudit engagement initial.

2. Boîtier selon la revendication 1, caractérisé en ce qu'il comprend en outre sur l'un des éléments (200) des ergots additionnels (206) orientés parallèmement à ladite direction de glissement, et sur l'autre élément (100) des trous (116) situés en vis-à-vis et destinés à recevoir lesdits ergots additionnels au cours dudit mouvement de glissement.

3. Boîtier selon l'une des revendications 1 et 2, caractérisé en ce que lesdites encoches (108, 109) présentent chacune la forme générale d'un "L" et sont prévues dans deux faces parallèles opposées du fond (100) et en ce que lesdits ergots associés (202) font saillie vers l'intérieur à partir de parois parallèles opposées (200c) dudit capot, ce dernier venant recouvrir lesdites encoches en position fermée.

4. Boîtier selon l'une des revendications 1 à 3, caractérisé en ce que lesdits moyens de verrouillage comprennent une plaque pivotante (214) commandée par une serrure (212) montée sur l'un des éléments (200), et deux protubérances (112) formées sur l'autre élément et définissant entre elles un passage (114) orienté parallèlement à la direction de glissement, ladite plaque pivotante pouvant occuper sélectivement une position de déverrouillage, dans laquelle elle peut traverser ledit passage (114) et autoriser ledit glissement, et une position de verrouillage, dans laquelle elle s'étend à cheval entre deux surfaces (112a), situées en vis-à-vis d'elle, desdites protubérances (112).

## Patentansprüche

1. Sicherheitsgehäuse, insbesondere für einen öffentlichen Fernsprecher, mit zwei durch eine Rückwand (100) und einen Deckel (200) gebildeten Elementen und einer Vorrichtung zur mechanischen Befestigung und Verriegelung des Deckels an der Rückwand, wobei die Vorrichtung zur mechanischen Befestigung und Verriegelung folgende Teile aufweist:
mehrere Zapfen (202), die an einem der Elemente (200) ausgebildet sind;
mehrere mit den Zapfen zusammenwirkende Aussparungen (108, 109), die jeweils einen ersten Teil (108) aufweisen, in den bei einer Bewegung der beiden Elemente (100, 200) aufeinander zu ein zugehöriger Zapfen (202) zunächst eingreift, sowie einen von dem ersten Teil abgewinkelten zweiten Teil (109), in den bei einer Verschiebebewegung der beiden Elemente relativ zueinander der zugehörige Zapfen anschließend eingreift, und
eine Verriegelungsvorrichtung (112, 214) mit einem beweglichen Teil (214), das mit einem der Elemente (200) einstückig ausgebildet ist und mit einem festen Teil (112) zusammenwirkt, das mit dem anderen Element (100) einstückig ausgebildet ist, um das Gehäuse dadurch geschlossen zu halten, daß eine Relativbewegung der beiden Elemente entgegen der vorgenannten Verschiebebewegung verhindert ist,
dadurch gekennzeichnet, daß ferner auf einem der Elemente (100) ein Scharnier (300) verschiebbar montiert ist und die Richtung der Verschiebebewegung bestimmt, an dem das andere Element (200) um eine sich im wesentlichen senkrecht zur Richtung der ersten Eingriffsbewegung erstreckende Achse gelenkig befestigt ist.

2. Gehäuse nach Anspruch 1,
dadurch gekennzeichnet, daß an dem einen Element (200) sich parallel zur Bewegungsrichtung erstreckende weitere Zapfen (206) und an dem anderen Element (100) Bohrungen (116) vorhanden sind, die einander gegenüberliegen und zur Aufnahme der weiteren Zapfen im Verlaufe der Verschiebebewegung bestimmt sind.

3. Gehäuse nach einem der Ansprüche 1 und 2,
dadurch gekennzeichnet, daß die Aussparungen (108, 109) jeweils im wesentlichen L-förmig und in zwei parallelen gegenüberliegenden Flächen der Rückwand (100) ausgebildet sind, und daß die zugehörigen Zapfen (202) von parallelen gegenüberliegenden Wänden (200c) des Deckels nach innen ragen, wobei der geschlossene Deckel die Aussparungen abdeckt.

4. Gehäuse nach einem der Ansprüche 1 bis 3,
dadurch gekennzeichnet, daß die Verriegelungsvorrichtung eine drehbare Platte (214) aufweist, die von einem an einem der Elemente (200) angebrachten Schloß (212) gesteuert ist, sowie zwei an dem anderen Element ausgebildete Ausstülpungen (112), zwischen denen eine sich parallel zur Bewegungsrichtung erstreckende Ausnehmung (114) gebildet ist, wobei die drehbare Platte wahlweise in einer Entriegelungsposition in die Ausnehmung (114) eintreten und die Verschiebebewegung zulassen kann und in einer Verriegelungsposition quer zwischen zwei ihr gegenüberliegenden Oberflächen (112a) der Ausstülpungen (112) ausgerichtet ist.

## Claims

1. A secure casing, especially for a public telephone, of the type comprising two elements, namely a base (100) and a cap (200), and means of mechanically fixing and locking the cap to the base, the mechanical fixing and locking means comprising:
a plurality of lugs (202) formed on one (200) of the elements;
a plurality of notches (108, 109) intended to cooperate with said lugs and each comprising a first part (108) in which an associated lug (202) initially engages as the two elements (100, 200) are brought closer to each other, and a second part (109) inclined with respect to the first and in which said associated lug then engages during a sliding movement of the two elements relative to each other, and
locking means (112, 214) comprising a movable member (214) integral with one of the elements (200) and capable of cooperating with a fixed part (112) integral with the other element (100) to hold the casing closed by preventing relative sliding of the two elements in the opposite direction from the above-mentioned sliding,
characterised in that it further comprises a hinge (300) mounted slidingly on one of the elements (100) and defining the direction of said sliding movement, and to which the other element (200) is articulated about an axis generally perpendicular to the direction of said initial engagement.

2. A casing according to claim 1, characterised in that it further comprises, on one of the elements (200), additional lugs (206) oriented in parallel with said sliding direction and, on the other element (100), holes (116) situated opposite said additional lugs so as to receive them during said sliding movement.

3. A casing according to either one of claims 1 and 2, characterised in that said notches (108, 109) are each in the general shape of an "L" and are provided in two parallel opposing faces of the base (100) and in that said associated lugs (202) project inwards from opposing parallel walls (200c) of said cap, the latter covering said notches in the closed position.

4. A casing according to any one of claims 1 to 3, characterised in that said locking means comprise a pivoting plate (214), controlled by a lock (212) mounted on one (200) of the elements, and two projections (112) formed on the other element and defining between them a passage (114) oriented in parallel with the sliding direction, said pivoting plate being capable of selectively assuming an unlocked position, in which it may pass through said passage (114) and permit said sliding, and a locked position, in which it straddles two surfaces (112a), situated facing it, of said projections (112).
